# EUROPEAN PATENT SPECIFICATION

(11) **EP 1 777 336 B1**
(45) Date of publication and mention of the grant of the patent: **21.07.2010**
(21) Application number: 06122026.5
(22) Date of filing: 10.10.2006
(51) Int. Cl.: D06N 3/00, D03D 11/02, B32B 5/02

(54) **Coated fabric**
Beschichtete Gewebe
Tissu enduit

(30) Priority: 20.10.2005 IT PD20050085 U
(43) Date of publication of application: 25.04.2007
(73) Proprietor: Naizil S.P.A., 35011 Campodarsego (PD) (IT)
(72) Inventor: Ziliotto, Alberto, 35010, CADONEGHE PD (IT)
(74) Representative: Modiano, Micaela Nadia

(56) References cited:
- EP-A- 0 617 160
- DE-A1- 10 150 102
- DE-U1- 29 804 803

## Description

The present invention relates to a coated fabric particularly for coverings, tensile structures, tent structures, canopies for trucks and other similar applications.

Currently, the need is felt increasingly to protect against theft or vandalism the goods transported by trucks in which the transport compartments are closed simply by means of covering canopies, which can indeed be subjected to attempts to tear them, for example for theft.

To prevent these theft attempts from being successful, fabrics reinforced with metallic mesh are currently known and used.

These known types of reinforced fabric are constituted generally by a metallic mesh, which is covered with one or more spread layers of polyvinyl chloride or other plastic material; such covered plastic mesh is then applied to a supporting fabric by heat-sealing.

However, these known reinforced fabrics have the drawback of being very rigid and therefore difficult to shape in order to adapt to a frame which must support them so as to cover the goods compartment of a truck.

EP 0 617160 A1 discloses a covered fabric that comprises a fabric which is covered on both faces with spread coating layers. A plurality of parallel tubular elements are formed inside the fabric, in which there are arranged flaps, cables or other flexible elements.

DE 10150102 discloses a cover tarpaulin that comprises a tarp layer upon which a steel wire square netting is located and held in place by belt structure connected to the tarp layer by means of hot-air or induction welding.

The aim of the present invention is to provide a coated fabric particularly for coverings, tensile structures, tent structures, canopies for trucks and other similar applications which is capable of obviating the drawbacks of known types of reinforced fabric.

Within this aim, an object of the present invention is to provide a coated fabric which is more flexible and easier to install, for example so as to cover the transport compartment of a truck, than known types of reinforced fabric.

Another object of the present invention is to provide a coated fabric which is capable of contrasting cutting and tearing at least as much as known types of reinforced fabric.

Another object of the present invention is to provide a coated fabric which has many uses with respect to known types of reinforced fabric.

Another object of the present invention is to provide a coated fabric which can be manufactured cheaply with known systems and technologies.

In accordance with the invention, there is provided a coated fabric, particularly for coverings, tensile structures, tent structures, canopies for trucks and other similar applications, as defined in the appended claims.

Further characteristics and advantages of the invention will become better apparent from the following detailed description of a preferred but not exclusive embodiment thereof, illustrated by way of non-limiting example in the accompanying drawings, wherein:
Figure 1 is a perspective view of a portion of a coated fabric according to the invention;
Figure 2 is a partially sectional perspective detail view of a coated fabric according to the invention;
Figure 3 is a sectional top detail view of a coated fabric according to the invention.

With reference to the figures, a coated fabric particularly for coverings, tensile structures, tent structures, canopies for trucks and other similar applications according to the invention is generally designated by the reference numeral 10.

The coated fabric 10 comprises a fabric substrate 11, onto which two covering layers made of plastic material, respectively 12 and 13, are spread, one for each surface of the fabric substrate 11.

The fabric substrate 11is made of filaments of a plastic material selected among polyester, polyamide, polypropylene or equivalents.

The fabric substrate 11 has series of its own weft filaments 14 and warp filaments 15 which are separated in one or more regions so as to form longitudinal tubular passages 16 and 17.

A first series of tubular passages 16 is parallel to a first direction, and a second series of tubular passages 17 is parallel to a second direction which lies transversely to the first direction.

In the exemplary embodiment of the invention described here by way of non-limiting example of the invention, the first series of passages 16 is oriented in the direction of the weft of the fabric substrate 11, while the second series of passages 17 lies in the direction of the warp.

Each passage is formed by the separation of the weft and warp filaments into two separately woven groups.

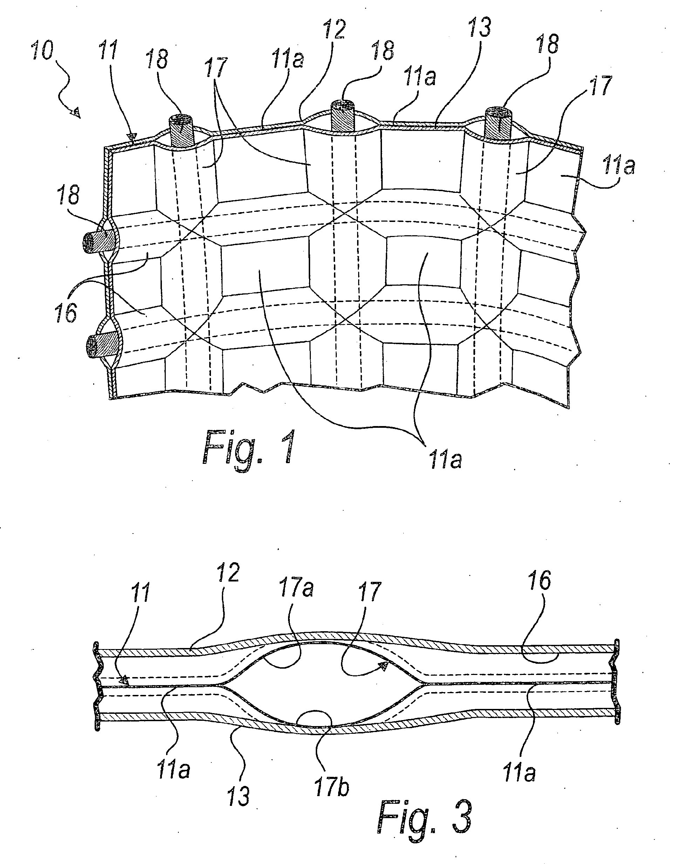

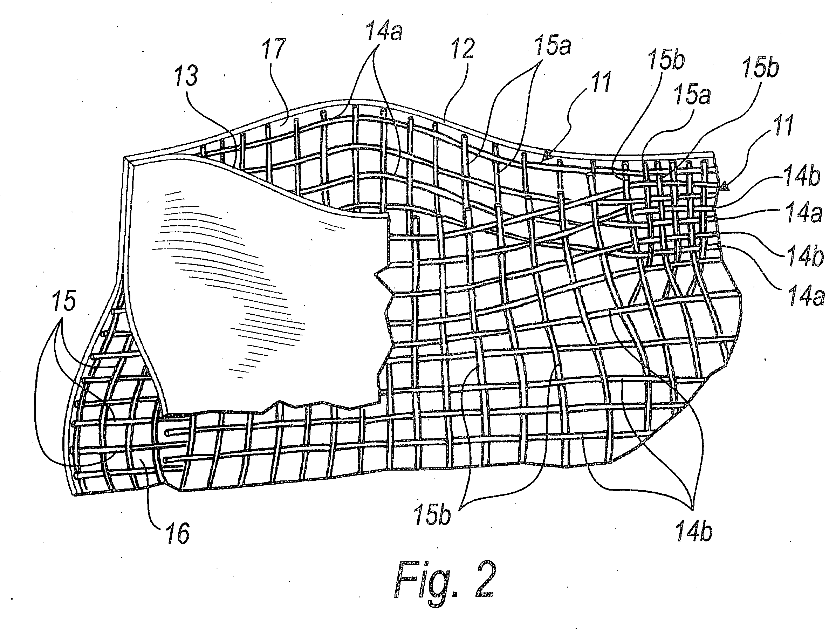

Consider for example the passage 17, shown in Figures 2 and 3.

By separating first weft filaments 14a from alternated second weft filaments 14b and first warp filaments 15a from alternated second warp filaments 15b, the fabric is divided into two parts, a first part 17a and a second part 17b, so as to form the passage 17.

In the regions in which the two mutually opposite parts that form the passages are mutually joined, the first and second weft filaments 14a and 14b are arranged alternately so as to form a single fabric with the first and second warp filaments 15a and 15b.

The two parts 17a and 17b merge without discontinuity in regions 11a with a single substrate layer.

In the regions 11 a of the fabric 10 in which the fabric substrate 11 is constituted by twice as many filaments as the passages 16 and 17, the strength of the fabric 10 is particularly high.

Flexible or rigid cut-resistant longitudinally elongated elements are inserted in the tubular passages 16 and 17.

Such longitudinally elongated elements can be selected among filaments or braids or cords made of metallic material, belts or the like.

In the embodiment described here, a braid of steel wires 18 is inserted in each passage and is flexible but resistant to cutting performed by scissors or by a knife.

The covering layers 12 and 13 are obtained by spreading or resin-coating with plastic materials such as expanded or non-expanded elastomers or plastomers.

In particular, the covering layers 12 and 13 are provided by spreading one or more passes of a plastic material selected among polyvinyl chloride, polyurethane, polyacrylate, synthetic rubber or other similar and equivalent plastic materials.

The fabric substrate 11, produced with the passages 16 and 17, is covered by spreading with the layers 12 and 13, is cut to size according to its use, and only thereafter are the metallic braids 18 inserted in the passages 16 and 17.

The braids 18 are left free inside the passages, so that the fabric 10 that supports them remains, as a whole, soft and easily adaptable; this, for example, allows to adapt easily the fabric 10, strengthened by the steel braids 18, to a supporting frame which lies above the goods compartment of a truck.

The covered fabric 10 according to the invention can have many applications, depending on what is inserted in the passages 16 and 17.

Such passages in fact can also accommodate tubes for the passage of air or water or cables for conducting electrical current.

In practice it has been found that the invention thus described solves the problems noted in known types of reinforced fabric.

In particular, the present invention provides a covered fabric which is more flexible and easier to install, for example to cover the goods compartment of a truck, than known types of reinforced fabric.

Moreover, the present invention provides a coated fabric which is capable of contrasting cutting and tearing at least as much as known types of reinforced fabric.

Further, the present invention provides a coated fabric which has many uses with respect to known types of reinforced fabric.

Moreover, the present invention provides a coated fabric which can be manufactured cheaply with known systems and technologies.

In practice, the materials employed, so long as they are compatible with the specific use, as well as the dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A coated fabric, particularly for coverings, tensile structures, tent structures, canopies for trucks and other similar applications, of the type which comprises a fabric substrate (11) coupled to at least one covering layer (12, 13) made of plastic material, the weft filaments (14a, 14b) and/or warp filaments (15a, 15b) of said substrate (11) being separated in one or more regions so as to form longitudinal tubular passages (16, 17), said coated fabric further comprising a plurality of said longitudinal tubular passages (16, 17), a first series (16) being parallel to a first direction and a second series (17) being parallel to a second direction which lies transversely to said first direction, flexible or rigid cut-resistant longitudinally elongated elements (18) being inserted in said tubular passages (16, 17), and in the regions (11a) between said perpendicular longitudinal passages (16,17) said weft filaments (14a,14b) and said warp filaments (15a,15b) being arranged alternately to form a single fabric at said regions (11a).

2. The fabric according to claim 1, **characterized in that** said first and second series of passages (16, 17) lie respectively in the direction of the weft of the fabric substrate (11) and in the direction of the warp.

3. The fabric according to claim 2, **characterized in that** said longitudinally elongated elements are selectively filaments or braids or cords made of metallic material, or belts.

4. The fabric according to claim 3, **characterized in that** said longitudinally elongated elements are braids made of steel wire (18).

5. The fabric according to the preceding claims, **characterized in that** said fabric substrate (11) is provided by means of filaments made of a plastic material selected among polyester, polyamide, and polypropylene .

6. The fabric according to the preceding claims, **characterized in that** said at least one covering layer (12, 13) is obtained by spreading or resin-coating plastic materials such as expanded or non-expanded elastomers or plastomers.

7. The fabric according to the preceding claims, **characterized in that** said at least one covering layer (12, 13) is made of at least one plastic material selected among polyvinyl chloride, polyurethane, polyacrylate, and synthetic rubber.

## Patentansprüche

1. Beschichtetes Gewebe, insbesondere für Abdeckungen, Seilnetzkonstruktionen, Zeitaufbauten, Abdeckplanen für Lastkraftwagen und sonstige ähnliche Anwendungen der Art, die ein Gewebesubstrat (11) umfassen, das zumindest mit einer Abdeckschicht (12, 13) aus Kunststoffmaterial verbunden ist, wobei die Schussfäden (14a, 14b) und/oder die Kettfäden (15a, 15b) des Substrats (11) in einen Bereich oder mehrere Bereichen separiert sind, um längliche röhrenförmige Durchgänge (16, 17) auszubilden, wobei das beschichtete Gewebe weiterhin eine Vielzahl an besagten länglichen röhrenförmigen Durchgängen (16, 17) umfasst, von denen eine erste Reihe (16) parallel zu einer ersten Richtung und eine zweite Reihe (17) parallel zu einer zweiten Richtung verläuft, die sich quer zu der ersten Richtung erstreckt, wobei nachgiebige bzw. unnachgiebige, schnittfeste, langgestreckte Elemente (18) in den röhrenförmigen Durchgängen (16, 17) eingefügt sind, und in den Bereichen (11a) zwischen den senkrechten länglichen Durchgängen (16, 17) die Schussfäden (14a, 14b) und die Kettfäden (15a, 15b) abwechselnd angeordnet sind, um in den Bereichen (11a) ein einzelnes Gewebe auszubilden.

2. Gewebe nach Anspruch 1, **dadurch gekennzeichnet, dass** sich die erste und zweite Serie von Durchgängen (16, 17) jeweils in Richtung des Schusseintrags des Gewebesubstrats (11) und in Kettenrichtung erstrecken.

3. Gewebe nach Anspruch 2, **dadurch gekennzeichnet, dass** es sich bei den langgestreckten Elementen wahlweise um Fäden oder Stränge oder Litzen, die aus metallischem Material bestehen, oder um Riemen handelt.

4. Gewebe nach Anspruch 3, **dadurch gekennzeichnet, dass** es sich bei den langgestreckten Elementen um Litzen aus Stahldraht (18) handelt.

5. Gewebe nach einem der vorherigen Ansprüche, **dadurch gekennzeichnet, dass** das Gewebesubstrat (11) vermittels von Fäden vorgesehen ist, die aus Kunststoffmaterial ausgewählt aus Polyester, Polyamid und Polypropylen gefertigt sind.

6. Gewebe nach einem der vorherigen Ansprüche, **dadurch gekennzeichnet, dass** die wenigstens eine Abdeckschicht (12, 13) **dadurch** erhalten wird, indem Kunststoffmaterial, wie etwa expandierte oder nicht-expandierte Elastomere oder Plastomere, gerakelt oder mit Harz beschichtet werden.

7. Gewebe nach einem der vorherigen Ansprüche, **dadurch gekennzeichnet, dass** die zumindest eine Abdeckschicht (12, 13) zumindest aus einem Kunststoffmaterial ausgewählt aus Polyvinylchlorid, Polyurethan, Polyacrylat und synthetischem Kautschuk gefertigt sind.

## Revendications

1. Tissu enduit, en particulier pour des couvertures, structures de traction, structures de tente, toits amovibles pour des camions et d'autres applications similaires, du type qui comprend un substrat tissé (11) couplé à au moins une couche de revêtement (12, 13) faite d'un matériau plastique, les filaments de trame (14a, 14b) et/ou les filaments de chaîne (15a, 15b) dudit substrat (11) étant séparés en une ou plusieurs régions de manière à former des passages tubulaires longitudinaux (16, 17), ledit tissu enduit comprenant en outre une pluralité desdits passages tubulaires longitudinaux (16, 17), une première série (16) étant parallèles à une première direction et une deuxième série (17) étant parallèles à une deuxième direction qui est transversale à ladite première direction, des éléments souples ou rigides résistant aux coupures allongés de manière longitudinale (18) étant insérés dans lesdits passages tubulaires (16, 17), et dans les régions (11a) entre lesdits passages longitudinaux perpendiculaires (16, 17), lesdits filaments de trame (14a, 14b) et lesdits filaments de chaîne (15a, 15b) étant agencés de manière alternée pour former un seul tissu auxdites régions (11 a),

2. Tissu selon la revendication 1, **caractérisée en ce que** lesdites première et deuxième séries de passages (16, 17) s'étendent respectivement dans la direction de la trame du substrat tissé (11) et dans la direction de la chaîne.

3. Tissu selon la revendication 2, **caractérisé en ce que** lesdits éléments allongés de manière longitudinale sont sélectivement des filaments ou des tresses ou des câbles faits d'un matériau métallique ou des courroies.

4. Tissu selon la revendication 3, **caractérisé en ce que** lesdits éléments allongés de manière longitudinale sont des tresses faites d'un câble d'acier (18).

5. Tissu selon les revendications précédentes, **caractérisé en ce que** ledit substrat tissé (11) est fabriqué avec des filaments faits d'un matériau plastique choisi parmi le polyester, le polyamide, et le polypropylène.

6. Tissu selon les revendications précédentes, **caractérisé en ce que** ladite au moins une couche de couverture (12, 13) est obtenu par enduction ou enrobage résineux de matériaux plastiques tels que des élastomères ou plastomères expansés ou non expansés.

7. Tissu selon les revendications précédentes, **caractérisé en ce que** ladite au moins une couche de couverture (12, 13) est faite d'au moins un matériau plastique choisi parmi le chlorure de polyvinyle, le polyuréthane, le polyacrylate, et le caoutchouc synthétique.
